(19) Europäisches Patentamt
European Patent Office
Office européen des brevets

(11) **EP 2 690 315 A1**

(12) **EUROPÄISCHE PATENTANMELDUNG**

(43) Veröffentlichungstag:
**29.01.2014 Patentblatt 2014/05**

(51) Int Cl.:
*F16H 41/24* *(2006.01)*  *F16H 45/02* *(2006.01)*
*F16F 15/14* *(2006.01)*

(21) Anmeldenummer: **13173580.5**

(22) Anmeldetag: **25.06.2013**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(30) Priorität: **25.07.2012 DE 102012213014**

(71) Anmelder: **ZF Friedrichshafen AG
88038 Friedrichshafen (DE)**

(72) Erfinder:
• **Mencher, Georg
97506 Grafenrheinfeld (DE)**
• **Frey, Peter
97447 Gerolzhofen (DE)**
• **Sudau, Jörg
97464 Niederwerrn (DE)**

(54) **Hydrodynamischer Drehmomentwandler**

(57) Ein Hydrodynamischer Wandler (100) gemäß einem Ausführungsbeispiel umfasst eine einer Antriebseinheit zugewandte erste Gehäuseschale (120) und eine der Antriebseinheit abgewandte zweite Gehäuseschale (130), wobei die erste Gehäuseschale (120) und die zweite Gehäuseschale (130) um eine gemeinsame Drehachse (140) drehbar angeordnet sind. Die erste Gehäuseschale (120) weist entlang der Drehachse (140) eine Länge ($L_{WDE}$) auf, die kleiner als eine Länge ($L_{ZPU}$) der zweiten Gehäuseschale (120) entlang der Drehachse (140) ist. Ein Ausführungsbeispiel kann gegebenenfalls so ein flexibleres Konzept zur Schaffung eines hydrodynamischen Wandlers (100) an unterschiedliche Anforderungen mit möglichst einfachen Mitteln hinsichtlich Konstruktion und/oder technischer Umsetzung ermöglichen.

Fig. 1

EP 2 690 315 A1

**Beschreibung**

Ausführungsbeispiele beziehen sich auf einen hydrodynamischen Wandler, wie er beispielsweise bei Fahrzeugen im Rahmen ihres Antriebsstrangs, insbesondere bei Kraftfahrzeugen für die Personen- und Güterbeförderung, eingesetzt werden kann.

Im Bereich des Fahrzeugbaus, und hier insbesondere im Bereich des Kraftfahrzeugbaus, besteht die Tendenz, stetig eine weitere Verringerung des Kraftstoffverbrauchs und des Schadstoffausstoßes anzustreben. Zu diesem Zweck werden unterschiedliche Maßnahmen eingesetzt, zu denen beispielsweise der Einsatz kleinerer, aufgeladener Motoren gehört, was auch als "Downsizing" bezeichnet wird. Ebenso werden Motoren mit einer besseren Kraftentfaltung bei niedrigen Drehzahlen eingesetzt, was auch als "Downspeeding" bezeichnet wird. Hinzu treten Maßnahmen, wie etwa eine gezielte Zylinderabschaltung bei Motoren sowie der Einsatz leichterer Karosserien und Antriebstränge.

Im Bereich der Antriebsstrangtechnik, und hier insbesondere im Bereich der Getriebetechnik und der mit dieser eng in Zusammenhang stehenden Kupplungstechnik, wird beispielsweise bei Stufenautomatikgetrieben versucht, einen Betrieb der betreffenden Kupplungen auf niedrigere Drehzahlen auszuweiten, bei dem eine Wandlerkupplung bzw. Wandlerüberbrückungskupplung in einem geschlossenen Zustand betrieben werden kann. Ebenso wird versucht, Fahrzustände und Fahrbereiche zu vermeiden, bei denen diese in einem Zustand betrieben werden, in dem ein Dauerschlupf herrscht.

Um dennoch Anforderungen der Fahrzeughersteller und ihrer Kunden an Komfort und Fahrleistungen auch weiterhin erfüllen zu können, ist eine Verbesserung der Entkopplungswirkung des oder der verbauten Torsionsdämpfer im Rahmen von hydrodynamischen Wandlern bezüglich der in den Antriebsstrang eingeleiteten Drehungleichmäßigkeit wünschenswert.

Die DE 10 2009 042 837 A1 bezieht sich so beispielsweise auf einen hydrodynamischen Drehmomentwandler mit einem von einem Pumpenrad angetriebenen hydrodynamischen Kreislauf. Der Drehmomentwandler enthält ferner ein mit einem Ausgangsteil verbundenes Turbinenrad sowie ein Gehäuse, in dem zusätzlich ein Drehschwingungsdämpfer mit mehreren Dämpferstufen und einem Fliehkraftpendel untergebracht sind. Er enthält ferner eine das Gehäuse und das Ausgangsteil verbindende Wandlerüberbrückungskupplung. Bei dem in diesem Dokument beschriebenen hydrodynamischen Drehmomentwandler wird ein im Kraftfluss vor einem Fliehkraftpendel geschalteter Turbinentilger verwendet.

Es nutzen jedoch typischerweise vorhandene und hinsichtlich ihres Designs bereits hoch optimierte Wandler für Getriebe mit sechs und mehr Vorwärtsgängen, also beispielsweise für acht oder neun Vorwärtsgänge, den im Getriebe zur Verfügung stehenden Bauraum bereits aus. Auch bieten diese innerhalb des jeweiligen Wandlergehäuses häufig nicht ausreichend Raum, um verbesserte Torsionsdämpfer zu implementieren. Um nun dennoch den steigenden Anforderungen im Hinblick auf eine Verringerung von Drehungsungleichmäßigkeit Herr zu werden und entsprechend zusätzliche Massenschwinger und/oder zusätzliche Federsätze axial zwischen einem bereits zweireihig ausgeführten Torsionsdämpfer und einem hydrodynamischen Kreislauf im Inneren des Wandlers zu realisieren, ist häufig ein vergrößertes Wandlergehäuse unumgänglich.

Es besteht daher so ein Bedarf, ein flexibleres Konzept zur Schaffung eines hydrodynamischen Wandlers an unterschiedliche Anforderungen mit möglichst einfachen Mitteln hinsichtlich Konstruktion und/oder technischer Umsetzung zu schaffen.

Diesem Bedarf trägt ein hydrodynamischer Wandler gemäß Patentanspruch 1 Rechnung.

Ein hydrodynamischer Wandler gemäß einem Ausführungsbeispiel umfasst eine einer Antriebseinheit zugewandte erste Gehäuseschale und eine der Antriebseinheit abgewandte zweite Gehäuseschale, wobei die erste Gehäuseschale und die zweite Gehäuseschale um eine gemeinsame Drehachse drehbar angeordnet sind, und wobei die erste Gehäuseschale entlang der Drehachse eine Länge aufweist, die kleiner als eine Länge der zweiten Gehäuseschale entlang der Drehachse ist.

Einem Ausführungsbeispiel eines hydrodynamischen Wandlers gemäß einem Ausführungsbeispiel liegt so die Erkenntnis zugrunde, dass so mithilfe konstruktiv und umsetzungstechnisch einfacher Mittel ein flexibles Konzept zur Anpassung eines hydrodynamischen Wandlers an unterschiedliche Anforderungen dadurch geschaffen werden kann, dass die der Antriebseinheit abgewandte zweite Gehäuseschale entlang der gemeinsamen Drehachse länger ausgeführt wird, als die der Antriebseinheit zugewandten ersten Gehäuseschale. So stellt die erste Gehäuseschale typischerweise diejenige dar, welche komplexere Strukturen aufweist, sodass diese hinsichtlich Veränderungen schwieriger umzusetzen sind. Eine Anpassung der ersten Gehäuseschale ist daher im Allgemeinen mit einem deutlich höheren konstruktiven und/oder umsetzungsbezogenen Aufwand verbunden.

So weist die erste Gehäuseschale häufig eine Anbindungsstruktur zur Montage des hydrodynamischen Wandlers an der Antriebseinheit oder an einer Ausgangswelle der Antriebseinheit auf. Ebenso kann sie eine Befestigungsstruktur, beispielsweise eine Niete, zur Aufnahme eines Bedienelements einer Wandlerüberbrückungskupplung, also beispielsweise einen Kolbenträger, umfassen. Sie kann ferner eine Dichtstruktur, beispielsweise eine Dichtfläche für das Bedienelement der Wandlerüberbrückungskupplung, umfassen. Auch kann gegebenenfalls eine Struktur zur Schaffung einer formschlüssigen Verbindung zu der Wellenüberbrückungskupplung, beispielsweise eine an einem Außendurchmesser integrierte Verzahnung, vorgesehen sein. Sie kann eine umlaufende Nut, beispielsweise zur Aufnahme eines Sicherungsrings, eine Lauffläche für eine Lagerscheibe oder eine Reibfläche für die Wandlerüberbrückungskupplung an der ersten Gehäuseschale aufweisen. Im Unterschied hierzu umfasst die zweite Gehäuseschale hier häufig weniger unmittelbar mit dieser verbundene oder an dieser vorgesehene Komponenten auf. Eine Änderung der ersten Gehäuseschale stellt daher im Vergleich zu einer Anpassung der zweiten Gehäuseschale häufig einen tiefer gehenden Eingriff dar, welcher mit einem entsprechend höheren Aufwand hinsichtlich Konstruktion und/oder technischer Realisierung verbunden sein kann.

Im Unterschied hierzu stellt die zweite Gehäuseschale, welche der Antriebseinheit abgewandt ist, also beispielsweise einem nachgeschalteten Getriebe zugewandt ist, typischerweise ein einfacheres Bauteil dar, sodass häufig eine Änderung dieses Bauteils mit einfacheren Mitteln hinsichtlich Konstruktion und/oder Umsetzung möglich ist. Ergänzend oder alternativ kann hierdurch gegebenenfalls auch eine Montage des hydrodynamischen Wandlers vereinfacht werden, da die erste Gehäuseschale aufgrund ihrer geringeren Erstreckung entlang der Drehachse, also ihrer Erstreckung in axialer Richtung, weniger Komponenten seitlich bzw. radial überdeckt. Diese können also während der Montage des hydrodynamischen Wandlers gegebenenfalls auch seitlich leichter erreichbar bleiben.

Bei einem hydrodynamischen Wandler gemäß einem Ausführungsbeispiel kann die zweite Gehäuseschale eine Materialstärke aufweisen, die geringer als eine Materialstärke der ersten Gehäuseschale ist. Hierdurch kann es möglich sein, ein Gewicht des hydrodynamischen Wandlers zu senken oder auch eine Gewichtszunahme durch eine Verlängerung der zweiten Gehäuseschale gegenüber einer Referenzimplementierung nach oben hin zu begrenzen. Hierbei kann es aufgrund der zuvor beschriebenen strukturellen Komplexität und der gegebenenfalls implementierten Anbindbarkeit der ersten Gehäuseschale an die Antriebseinheit vermieden werden, durch Drehmomente oder Drehmomentschwankungen auftretende Belastungen im Bereich der Anbindungsstrukturen auf einen Bereich zu konzentrieren, bei dem die Materialstärke größer ist. Auch kann hierdurch gegebenenfalls eine Massenträgheit des hydrodynamischen Wandlers reduziert werden.

Bei einem Ausführungsbeispiel eines hydrodynamischen Wandlers kann so die zweite Gehäuseschale eine Materialstärke aufweisen, die höchstens ein 0.8-faches einer Materialstärke der ersten Gehäuseschale beträgt. Bei anderen Ausführungsbeispielen kann dieses Verhältnis beispielsweise auf höchstens ein 0.7-faches oder ein höchstens 0.6-faches begrenzt sein, wodurch ein Kompromiss zwischen Steifigkeit einerseits und Gewicht sowie Trägheitsmoment andererseits gegebenenfalls weiter verbessert werden kann.

Bei einem hydrodynamischen Wandler gemäß einem Ausführungsbeispiel kann die Länge der ersten Gehäuseschale entlang der Drehachse höchstens ein 0.7-faches der Länge der zweiten Gehäuseschale betragen. Hierdurch kann es möglich sein, eine Erreichbarkeit von Komponenten im Inneren der ersten Gehäuseschale und der Montage zu verbessern. Ergänzend oder alternativ kann - beispielsweise im Zusammenspiel mit den zuvor beschriebenen Wandstärken - ein Gewicht und/oder ein Massenträgheitsmoment besonders gering gehalten werden.

Bei einem hydrodynamischen Wandler gemäß einem Ausführungsbeispiel kann wenigstens eine Pumpenschaufel mechanisch fest an einer Innenfläche der zweiten Gehäuseschale mit dieser verbunden sein. Ergänzend oder alternativ kann wenigstens ein Innenring mit der zweiten Gehäuseschale mechanisch fest verbunden sein. Hierdurch kann es möglich sein, eine mechanische Stabilität der zweiten Gehäuseschale zu vergrößern und diese so weiter zu versteifen. Dies kann gegebenenfalls die Möglichkeit eröffnen, durch eine Verringerung der Materialstärke der zweiten Gehäuseschale weiter Gewicht und/oder Trägheitsmoment einzusparen, ohne eine signifikante Schwächung hinsichtlich einer Belastbarkeit des hydrodynamischen Wandlers in Kauf nehmen zu müssen.

Bei einem hydrodynamischen Wandler gemäß einem Ausführungsbeispiel kann die zweite Gehäuseschale eine um die Drehachse im Wesentlichen umlaufende und bezüglich eines Innenraums des Wandlers konvexe Auswölbung umfassen. Auch durch diese Struktur kann es gegebenenfalls möglich sein, eine mechanische Belastbarkeit bzw. eine Steifigkeit der zweiten Gehäuseschale zu steigern und so beispielsweise einer durch eine Reduzierung der Materialstärke der zweiten Gehäuseschale eintretenden Schwächung bzw. Verringerung der Steifigkeit wenigstens teilweise, gegebenenfalls auch vollständig entgegenzutreten. Gegebenenfalls kann es sogar möglich sein, eine durch eine Reduzierung der Materialstärke auftretende Verringerung der mechanischen Belastbarkeit vollständig auszugleichen und/oder diese sogar zu verbessern.

Ein hydrodynamischer Wandler gemäß einem Ausführungsbeispiel kann ferner wenigstens eine Turbinenschaufel umfassen, die in dem Innenraum des Wandlers angeordnet ist. Die zweite Gehäuseschale kann hierbei eine Länge entlang der Drehachse von wenigstens einem 1.1-fachen eines Abstands parallel zu der Drehachse von einer dem Innenraum abgewandten Oberfläche der zweiten Gehäuseschale auf Höhe der Auswölbung zu einem der Auswölbung am weitesten abgewandten Punkt der Turbinenschaufel oder einem mit dieser verbundenen Innenring in dem Innenraum aufweisen. Hierdurch kann es möglich sein, axialen Bauraum für beispielsweise einen Tilger und/oder einen erweiterten Torsionsdämpfer zu schaffen. Je nach konkreter Ausgestaltung kann hierbei auch wenigstens ein 1.5-faches verwendet werden, um beispielsweise auch größer bauende Komponenten oder mehrere Komponenten zusätzlich zu implementieren. Hierbei ist ein Objekt auf Höhe eines anderen Objekts, wenn diese einen gleichen, ähnlichen oder vergleichbaren Abstand von einer gemeinsamen Richtung oder einem gemeinsamen Punkt, also beispielsweise der gemeinsamen Drehachse, aufweisen.

Bei einem Wandler gemäß einem Ausführungsbeispiel mit einer Auswölbung kann sich die Auswölbung gegenüber einem im Wesentlichen senkrecht zu der Drehachse verlaufenden Abschnitt, der sich weiter als die Auswölbung zu der Drehachse hin erstreckt, um wenigstens ein 1.2-faches einer Ausdehnung einer mit der zweiten Gehäuseschale mechanisch fest verbundenen Pumpenschaufel erstrecken. So kann beispielsweise die Pumpenschaufel eine größere Erstreckung senkrecht zu der Drehachse als parallel zu dieser aufweisen. Auch hierdurch kann ein Bauraum für eine oder mehrere zusätzliche Komponenten in dem Innenraum des hydrodynamischen Wandlers, beispielsweise für einen (zusätzlichen oder größeren) Tilger oder einen (zusätzlichen oder größeren) Torsionsdämpfer, geschaffen werden.

Ein hydrodynamischer Wandler gemäß einem Ausführungsbeispiel kann ferner wenigstens einen Torsionsdämpfer und/oder wenigstens einen Tilger umfassen, wobei die zweite Gehäuseschale wenigstens einen Torsionsdämpfer und/oder wenigstens einen Tilger radial überdeckt. Anders ausgedrückt kann die zweite Gehäuseschale gerade so ausgebildet sein, dass diese den oder einen gegebenenfalls zusätzlich implementierten Torsionsdämpfer oder den oder einen gegebenenfalls zusätzlich implementierten Tilger alleine überdeckt. Hierdurch kann ebenso eine Veränderung oder Modifikation der ersten Gehäuseschale gegebenenfalls entfallen.

Bei einem hydrodynamischen Wandler gemäß einem Ausführungsbeispiel können die erste und die zweite Gehäuseschale unmittelbar miteinander mechanisch verbunden sein. Das Gehäuse des hydrodynamischen Wandlers kann also in diesem Fall im Wesentlichen durch die erste und die zweite Gehäuseschale gebildet sein. Die Verwendung eines Zwischenstücks zur Verlängerung eines gegebenenfalls bestehenden Gehäuses kann so gegebenenfalls vermieden werden. Die beiden Gehäuseschalen können hierbei beispielsweise mithilfe einer stoffschlüssigen, formschlüssigen und/oder kraftschlüssigen Verbindung miteinander verbunden werden. Hierbei werden die beiden Gehäuseschalen auch dann noch als miteinander unmittelbar mechanisch verbunden angesehen, wenn beispielsweise aufgrund einer wenigstens teilweise stoffschlüssigen Verbindung ein die Verbindung vermittelnder Stoff oder Struktur zwischen den beiden Gehäuseschalen angeordnet ist. Hierbei kommt eine kraftschlüssige oder reibschlüssige Verbindung durch Haftreibung, eine stoffschlüssige Verbindung durch molekulare oder atomare Wechselwirkungen und Kräfte und eine formschlüssige Verbindung durch eine geometrische Verbindung der betreffenden Verbindungspartner zustande. Die Haftreibung setzt somit insbesondere eine Normalkraftkomponente zwischen den beiden Verbindungspartnern voraus.

Bei einem solchen hydrodynamischen Wandler gemäß einem Ausführungsbeispiel können die erste Gehäuseschale und die zweite Gehäuseschale derart ausgebildet sein, dass die erste Gehäuseschale in einem Verbindungsbereich, in dem die erste Gehäuseschale mit der zweiten Gehäuseschale unmittelbar verbunden ist, die zweite Gehäuseschale radial außen umgreift. Hierdurch kann es gegebenenfalls möglich sein - abgesehen von einer Länge des Gehäuses des hydrodynamischen Wandlers, welches durch eine Länge der zweiten Gehäuseschale mitbestimmt wird - Einbaumaße des hydrodynamischen Wandlers im Wesentlichen durch die Struktur der ersten Gehäuseschale, also der antriebsseitigen bzw. der der Antriebseinheit zugewandten Seite, zu bestimmen. So kann es beispielsweise in einem solchen Fall möglich oder ratsam sein, ein Wuchtgewicht oder ein anderes entsprechendes Element an einer Außenfläche der zweiten Gehäuseschale anzubringen.

Als Antriebseinheit kann beispielsweise ein Motor, also beispielsweise ein Verbrennungsmotor (z. B. Ottomotor, Dieselmotor, Wankelmotor) verwendet werden. Die der Antriebseinheit abgewandte Seite kann beispielsweise einem Getriebeeingang bzw. einem Getriebe zugewandt sein, bei dem es sich beispielsweise um ein Stufengetriebe mit fest definierten Stufen (Unter- bzw. Übersetzungen), jedoch gegebenenfalls auch um ein stufenloses Getriebe handeln kann. Im Falle eines Stufengetriebes kann es sich bei dem betreffenden Getriebe um synchronisiertes, ein unsynchronisiertes oder auch ein nur teilweise synchronisiertes Getriebe handeln, das beispielsweise automatisch und/oder manuell betätigt werden kann. Das Getriebe kann beispielsweise auf Basis von Zahnrädern, Kegeln, Planetensätzen oder anderen eine Über- oder Untersetzung bewirkenden Bauteilen basieren.

Bei vielen Ausführungsbeispielen eines hydrodynamischen Wandlers sind die erste und/oder die zweite Gehäuseschale häufig im Wesentlichen rotationssymmetrisch ausgestaltet. Eine Symmetrieachse stimmt hierbei häufig im Wesentlichen mit der Drehachse überein. Eine Komponente kann so beispielsweise eine n-zählige Rotationssymmetrie aufweisen, wobei n eine natürliche Zahl größer oder gleich 2 ist. Eine n-zählige Rotationssymmetrie liegt dann vor, wenn die betreffende Komponente beispielsweise um eine Rotations- oder Symmetrieachse um $(360°/n)$ drehbar ist und dabei im Wesentlichen formenmäßig in sich selbst übergeht, also bei einer entsprechenden Drehung im Wesentlichen auf sich selbst im mathematischen Sinn abgebildet wird. Im Unterschied hierzu geht bei einer vollständigen rotationssymmetrischen Ausgestaltung einer Komponente bei einer beliebigen Drehung um jeden beliebigen Winkel um die Rotations- oder Symmetrieachse die Komponente formenmäßig im Wesentlichen in sich selbst über, wird also im mathematischen Sinn im Wesentlichen auf sich selbst abgebildet. Sowohl eine n-zählige Rotationssymmetrie wie auch eine vollständige Rotationssymmetrie werden hierbei als Rotationssymmetrie bezeichnet.

Nachfolgend werden unter Bezugnahme auf die beigefügte Figuren Ausführungsbeispiele eines hydrodynamischen Wandlers näher beschrieben und erläutert.

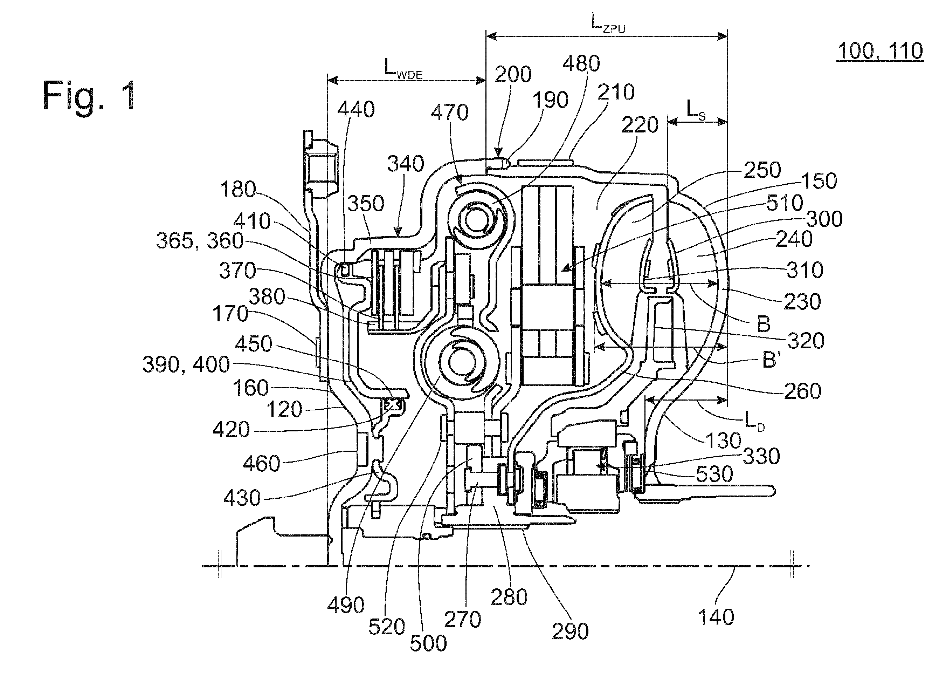

Fig. 1 zeigt eine Querschnittsdarstellung durch einen hydrodynamischen Wandler gemäß einem Ausführungsbeispiel.

Bei der nachfolgenden Beschreibung der beigefügten Figuren, die Ausführungsbeispiele zeigen, bezeichnen gleiche Bezugszeichen gleiche oder vergleichbare Komponenten. Ferner werden zusammenfassende Bezugszeichen für Komponenten und Objekte verwendet, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

Wie eingangs bereits erläutert wurde, besteht ein Bedarf, ein möglichst flexibles Konzept zur Anpassung eines hydrodynamischen Wandlers an unterschiedliche Anforderungen zu schaffen, welches mit möglichst einfachen Mitteln hinsichtlich Konstruktion und/oder technischer Umsetzung auskommt. So werden beispielsweise aus ökonomischen, jedoch auch aus ökologischen Gründen seitens der Hersteller von Fahrzeugen, insbesondere von Kraftfahrzeugen für den Personen- und/oder Lastentransport, also beispielsweise für Personenkraftwagen, aber auch für Lastkraftwagen und Busse, ökonomischere Antriebseinheiten eingesetzt, bei denen nicht zuletzt eine Reduzierung des Kraftstoffverbrauchs und/oder des Schadstoffausstoßes im Vordergrund stehen. Neben den bereits zuvor genannten kleineren, aufgeladenen Motoren und solchen mit einer besseren Kraftentfaltung bei niedrigeren Drehzahlen werden zusätzlich Techniken, wie etwa die Zylinderabschaltung sowie Gewichtsersparnisse im Bereich der Karosserie und der Antriebsstränge eingesetzt. Im Bereich der Antriebsstränge wird darüber hinaus versucht, beispielsweise bei Stufenautomatikgetriebe eine Ausweitung von Betriebszuständen zu erzielen, bei denen auch bei niedrigen Drehzahlen die Wandlerkupplung des betreffenden Getriebes in einem geschlossenen Zustand betrieben wird. Ebenso besteht das Ziel, Fahrbereich möglichst zu vermeiden, bei denen die Wandlerkupplung in einem Dauerschlupfzustand betrieben wird.

Durch diese Randbedingungen kann gegebenenfalls eine Tendenz verstärkt werden, vonseiten des betreffenden Antriebs Drehschwingungen und andere Drehungleichmäßigkeiten in den Antriebsstrang einzukoppeln. Um dennoch möglichst keine Abstriche im Bereich von Komfort und Fahrleistungen hinnehmen zu müssen, besteht daher ein Bedarf daran, entsprechende Drehungleichmäßigkeiten aus dem Antriebsstrang zu entfernen.

Häufig stellen hydrodynamische Wandler, zu denen beispielsweise hydrodynamische Drehmomentwandler zählen, komplexe Baugruppen dar, welche eine Vielzahl von aufeinander abgestimmten Komponenten umfassen. Hierzu zählen beispielsweise eine Pumpschaufelanordnung, durch die ein Strom eines Hydraulikmediums erzeugt wird, sowie eine entsprechende Turbinenschaufelanordnung, welche den erzeugten Hydraulikstrom aufnimmt und in eine entsprechende Drehbewegung umwandelt. Diese bilden so bei einem hydrodynamischen Wandler einen Hydraulikkreislauf.

Optional kann bei einem hydrodynamischen Drehmomentwandler ferner ein Leitrad umfassen, welches beispielsweise über einen Freilauf gekoppelt ist. Ein solcher hydrodynamischer Drehmomentwandler umfasst so im Allgemeinen ein entsprechendes Leitrad mit entsprechenden Leitflächen, welches über einen Freilauf gekoppelt ist. Auch dieser zählt zu den hydrodynamischen Wandlern.

Darüber hinaus kann der hydrodynamische Wandler ferner einen Torsionsdämpfer und/oder einen Tilger aufweisen, durch welche entsprechend Drehschwingungen und Drehungleichmäßigkeiten ausgeglichen werden können. Zur Verbesserung der Effizienz eines entsprechenden hydrodynamischen Wandlers kann ein solcher ferner eine Wandlerüberbrückungskupplung aufweisen, bei der es sich beispielsweise um eine Lamellenkupplung handeln kann, über die ein reibschlüssiger Kontakt zwischen Antrieb und Abtrieb des betreffenden hydrodynamischen Wandlers geschaffen werden kann. Zum Einkuppeln bzw. Auskuppeln der entsprechenden Wandlerüberbrückungskupplung weist ein solcher hydrodynamischer Wandler häufig ferner ein entsprechendes Bedienelement auf, das beispielsweise hydraulisch, pneumatisch, elektrisch oder mechanisch betrieben werden kann.

Einige dieser Komponenten sind mittelbar oder unmittelbar über entsprechende Strukturen mit einer ersten Gehäuseschale verbunden, die gegebenenfalls über eine entsprechende Anbindungsstruktur als Antriebselement des betreffenden hydrodynamischen Wandlers dient. Diese ist häufig der entsprechenden Antriebseinheit, also beispielsweise dem Verbrennungsmotor zugewandt angeordnet und beispielsweise mit einer Ausgangswelle der Antriebseinheit mechanisch gekoppelt bzw. verbunden.

Soll nun beispielsweise ausgehend von einer existierenden Ausgestaltung eines hydrodynamischen Wandlers dieser durch Integration eines zusätzlichen Tilgers, der auch als Massenschwinger bezeichnet wird, und/oder eines zusätzlichen Federsatzes im Rahmen des Torsionsdämpfers geändert werden, wird typischerweise mehr axialer Bauraum benötigt. Kann beispielsweise ein solcher zusätzlicher Federsatz axial zwischen einem, beispielsweise zweireihigen, Torsionsdämpfers und dem hydrodynamischen Kreislauf integriert werden, wobei der Kreislauf die zuvor genannte Pumpenschaufelanordnung und die Turbinenschaufelanordnung typischerweise umfasst. Durch die Integration dieser gegebenenfalls zusätzlichen Komponenten im Rahmen des Torsionsdämpfers benötigt der entsprechende hydrodynamische Wandler im Vergleich zu einer Variante ohne die zusätzlichen Komponenten zusätzlich mehr axialen Bauraum.

Tilger arbeiten hierbei im Allgemeinen nach dem Prinzip eines Fliehkraftpendels in einem Fliehkraftfeld. Sie umfassen so häufig eine Trägheitsmassenträgereinrichtung und pendelnd an dieser befestigt, um eine Rotationsachse drehbar gelagerte Trägheitsmassen. Die Trägheitsmassen sind hierbei bei Einleitung einer Drehbewegung bestrebt, diese in größtmöglichem Abstand zu umkreisen. Tritt so eine Drehschwingung auf, führen diese zu einer pendelnden Relativbewegung der Trägheitsmassen, wobei je nach unterschiedlicher Implementierung die Trägheitsmassen sich unterschiedlich bewegen können. Diese können beispielsweise rein translatorisch auf einer kreisförmigen Bewegungsbahn, oder aber auch eine Bewegungsbahn mit einem Krümmungsradius entlang laufen. Der Krümmungsradius kann sich hierbei gegebenenfalls ändern. Der Tilger wird hierbei im Allgemeinen nicht zur Übertragung eines Drehmoments verwendet, sondern ist lediglich dazu geeignet, über eine entsprechende Erregung auftretende Schwingungen zu dämpfen bzw. zu tilgen.

Dies hat häufig zur Folge, dass das Gehäuse des hydrodynamischen Wandlers entsprechend vergrößert und/oder verlängert werden sollte, um dem steigenden Bauraumbedarf Rechnung zu tragen. Dies führt jedoch zu größeren Gehäuseabmessungen.

Konventionell wird hierbei zwischen einem Deckel und der auch als Pumpe dienenden Gehäuseschale ein Zwischenstück eingefügt bzw. der Gehäusedeckel auf der Motorseite verlängert. Diese konventionellen Lösungen sind jedoch nicht ideal. Durch das Einfügen des Zwischenstücks muss zunächst ein zusätzliches Bauteil bereitgestellt und bevorratet werden. Dies kann grundsätzlich zwar wirtschaftlich als Blechteil erzeugt werden, erfordert jedoch im Bereich der Anschlüsse zu den beiden Gehäusehälften jeweils eine Drehbearbeitung. Das Zwischenstück ist dann mit beiden Gehäusehälften verschweißt, sodass gegenüber einem Herstellungsverfahren, bei dem das Wandlergehäuse lediglich zwei Gehäuseschalen umfasst, ein zusätzlicher Schweißvorgang notwendig wird. Während dieses Vorgehen für Kleinserien und Einzelstücke tragbar sein kann, ist grade aufgrund höherer geplanter Stückzahlen im Rahmen einer serienmäßigen, industriellen Fertigung das Vorsehen zusätzlicher Prozessschritte eher kritisch anzusehen sein. So kann hierdurch mit erheblichen Mehrkosten für Material, Prozesszeit, Anlagen und Logistik zu rechnen sein.

Konventionell wird darüber hinaus ein verlängerter Gehäusedeckel aufseiten des Motors verwendet. Der motorseitige Gehäusedeckel von hydrodynamischen Wandlern stellt jedoch häufig ein hochintegriertes und komplexes Bauteil dar. Das betreffende Bauteil, welches auch als Blechbauteil hergestellt und daher entsprechend bezeichnet wird, umfasst so typischerweise auf der Außenseite ausgeformte Nieten zur Aufnahme eines Anbindungsblechs, auf der Innenseite ausgeformte Nieten zur Aufnahme eines Kolbenträgers und am Außendurchmesser eine integrierte Verzahnung zur Aufnahme von Reiblamellen der entsprechenden Wandlerüberbrückungskupplung. Ebenso kann der Gehäusedeckel eine umlaufende Nut zur Aufnahme eines Sicherungsrings umfassen. Zusätzlich kann es eine Lauffläche für eine Lagerscheibe, eine Kolbendichtfläche sowie einen speziell ausgeführten Verbindungsbereich zur Aufnahme der getriebeseitigen Gehäusehälfte umfassen.

Eine Verlängerung dieses komplexen Bauteils würde daher einen erheblichen Mehraufwand und zusätzliche Kosten zur Erstellung und gegebenenfalls Änderung und Abstimmung der erforderlichen Werkzeuge mit sich bringen. Eine prozessfähige Herstellung eines solch verlängerten Bauteils ist darüber hinaus zu klären. So werden sämtliche Bearbeitungs- und Montageschritte beeinflusst. Die Zugänglichkeit der Verbindungsstellen wird so beispielsweise verschlechtert, sodass viele Komponenten, Vorrichtungen und andere Objekte neu erstellt und geändert werden müssen.

Der Einsatz eines Ausführungsbeispiels eines hydrodynamischen Wandler kann hier eine Vereinfachung bringen. Ein Ausführungsbeispiel eines hydrodynamischen Wandlers, wie es nachfolgend im Zusammenhang mit Fig. 1 noch näher beschrieben werden wird, ermöglicht so mit einfachen Mitteln hinsichtlich Konstruktion und/oder des Umsetzens eine Anpassung eines hydrodynamischen Wandlers auf Basis stehender Komponenten an unterschiedliche Anforderungen. Ebenso kann jedoch ein hydrodynamischer Wandler gemäß einem Ausführungsbeispiel ebenso als Ausgangspunkt für eine Neuentwicklung einer Serie hydrodynamischer Wandler dienen.

So zeigt Fig. 1 eine Querschnittsdarstellung durch einen hydrodynamischen Wandler 100 gemäß einem Ausführungsbeispiel, bei dem es sich genauer gesagt um einen hydrodynamischen Drehmomentwandler 110 handelt. Der hydrodynamische Wandler 100 weist hierbei eine erste Gehäuseschale 120 und eine zweite Gehäuseschale 130 auf, wobei die erste Gehäuseschale 120 einer in Fig. 1 nicht gezeigten Antriebseinheit zugewandt ist. Bei der Antriebseinheit kann es sich beispielsweise um einen Motor, also beispielsweise um einen Verbrennungsmotor eines Kraftfahrzeugs handeln. Die zweite Gehäuseschale 130 ist hierbei an einer der Antriebseinheit abgewandten Seite angeordnet, also beispielsweise an einer einem Getriebe zugewandten Seite. Die beiden Gehäuseschalen 120, 130 sind hierbei um eine gemeinsame Drehachse 140 drehbar angeordnet und bilden hierbei zusammen im Wesentlichen ein Gehäuse 150 des hydrodynamischen Wandlers 100.

Die erste Gehäuseschale 120 und die zweite Gehäuseschale 130 sind hierbei im Wesentlichen rotationssymmetrisch bezüglich der gemeinsamen Drehachse 140 ausgestaltet. Dies bedeutet jedoch nicht, dass die betreffenden Gehäuseschalen 120, 130 nicht gegebenenfalls symmetrisch oder asymmetrisch verteilte Strukturen aufweisen können.

Das Gehäuse 150 dient hierbei als Antriebsbauteil des hydrodynamischen Wandlers 100. Zu diesem Zweck ist an einer Außenfläche 160 der ersten Gehäuseschale 120 über eine Vernietung 170 eine Anbindungsstruktur 180 mit dem Gehäuse 150 befestigt, die entsprechend derart ausgestaltet ist, dass der hydrodynamische Wandler 100 mit der in Fig. 1 nicht gezeigten Antriebseinheit mechanisch verbindbar ist. Genauer gesagt dient die Anbindungsstruktur 180 zur drehfesten Kopplung des Gehäuses 150 an einer Ausgangswelle der Antriebseinheit. Als Folge einer Drehung der Antriebswelle dreht sich somit auch das Gehäuse 150 des hydrodynamischen Wandlers 100.

Die erste Gehäuseschale 120, die auch einfach als Wandlerdeckel bezeichnet wird, ist hierbei mit der zweiten Gehäuseschale 130 über eine Verschweißung 190 mechanisch fest verbunden. Die beiden Gehäuseschalen 120, 130 stehen so unmittelbar miteinander in Kontakt, sind also so unmittelbar miteinander mechanisch verbunden.

Die erste Gehäuseschale und die zweite Gehäuseschale sind hierbei derart ausgebildet, dass die erste Gehäuseschale in einem Verbindungsbereich 200, in dem die beiden Gehäuseschalen 120, 130 unmittelbar miteinander verbunden sind, die zweite Gehäuseschale 130 radial nach außen umgreift. Anders ausgedrückt überlappt die erste Gehäuseschale 120 die zweite Gehäuseschale 130 derart, dass zumindest im Bindungsbereich 200 ein Außendurchmesser des hydrodynamischen Wandlers 100 von einem Durchmesser der ersten Gehäuseschale 120 bestimmt wird.

Entsprechend ist bei dem in Fig. 1 gezeigten Ausführungsbeispiel ein Wuchtgewicht 210 zur Beseitigung von Unwuchten im Rahmen der Endfertigung an einer Außenseite der zweiten Gehäuseschale 130 benachbart zu dem Verbindungsbereich 200 angebracht worden. Das Wuchtgewicht 210 ist hierbei derart ausgelegt, dass dieses den durch die erste Gehäuseschale 120 bestimmten Durchmesser des hydrodynamischen Wandlers 100 im Wesentlichen nicht vergrößert.

Die zweite Gehäuseschale 130 weist an einer der ersten Gehäuseschale 120 abgewandten Seite eine im Wesentlichen umlaufende und bezüglich eines Innenraums 220 des hydrodynamischen Wandlers 100 konvex ausgeführte Auswölbung 230 auf. In dieser Auswölbung 230 sind eine Mehrzahl von Pumpenschaufeln 240 derart angeordnet, dass diese bei einer Drehung der zweiten Gehäuseschale 130, also bei einer Drehung des Gehäuses 150 um die Drehachse 140 entlang einer vorbestimmten Drehrichtung einen Strom eines hydraulischen Mediums bewirken, das sich in dem Innenraum 220 während des Betriebs des hydrodynamischen Wandlers 100 befindet. Zu diesem Zweck weisen die Pumpenschaufeln 240 einbezogen auf die Querschnittsdarstellung der Fig. 1 schräg verlaufende Form auf, durch die der zuvor bezeichnete Strom des hydraulischen Mediums (z. B. Öl) bewirkt wird.

Den Pumpenschaufeln 240 liegen entsprechende Turbinenschaufeln 250 gegenüber, auf die der Strom des hydraulischen Mediums gerichtet ist. Die Turbinenschaufeln 250 sind hierbei mit einem Turbinenschaufelträger 260 mechanisch fest verbunden, sodass aufgrund ihrer ebenfalls entsprechend geneigten Ausgestaltung der Strom des hydraulischen Mediums ein Drehmoment auf den Turbinenschaufelträger 260 ausüben kann. Der Turbinenschaufelträger 260 ist hierbei über eine Nietverbindung 270 mit einer Nabe 280 des hydrodynamischen Wandlers 100 verbunden, welche den Abtrieb des hydrodynamischen Wandlers 100 bildet. Die Nabe 280 weist eine Innenverzahnung 290 auf, über die das Drehmoment an eine in Fig. 1 nicht gezeigte, parallel zu der Drehachse 140 vonseiten der zweiten Gehäuseschale 130 in den hydrodynamischen Wandler 100 ragende Getriebeeingangswelle übertragen werden kann.

Die Turbinenschaufeln 250 sind hierbei mit dem Turbinenschaufelträger 260 mechanisch fest verbunden. Genauer gesagt handelt es sich hierbei um eine Verlötung. Entsprechend sind auch die Pumpenschaufeln 240 mit der zweiten Gehäuseschale 130 fest, im vorliegenden Fall über eine Verlötung verbunden.

Zur mechanischen Stabilisierung der Pumpenschaufeln 240 und/oder zur Führung des durch sie hervorgerufenen Stroms weist der hydrodynamische Wandler 100 ferner einen Innenring 300 auf, der die Pumpenschaufeln 240 miteinander verbindet. Auch die Turbinenschaufeln 250 weisen einen entsprechenden weiteren Innenring 310 auf. Die jeweiligen Schaufeln und der jeweilige Innenring bilden einen sogenannten Schaufelverband. So umfasst der hydrodynamische Wandler 100 folglich einen Pumpenschaufelverband mit den Pumpschaufeln 240 und dem Innenring 300 sowie einen Turbinenschaufelverband mit den Turbinenschaufeln 250 und dem weiteren Innenring 310. Durch diese Schaufelverbände wird ein im Wesentlichen geschlossener Hydraulikkreis gebildet.

In Strömungsrichtung des hydraulischen Mediums zwischen den Turbinenschaufeln 250 und den Pumpenschaufeln 240 ist ferner ein Leitrad 320 mit einem Freilauf 330 angeordnet. Durch das Vorhandensein des entsprechenden Leitrads 320 mit dem Freilauf 330 handelt es sich bei dem hydrodynamischen Wandler 100 um einen hydrodynamischen Drehmomentwandler 110, der aufgrund einer durch das Leitrad 320 bewirkten Umlenkung des Stroms des hydraulischen Mediums eine Drehmomenterhöhung unter bestimmten Betriebsbedingungen ermöglicht. Bei einer vergleichsweise großen Drehzahldifferenz zwischen den Pumpenschaufeln 240 und den Turbinenschaufeln 250 kann über das Leitrad 320 und den in diesem Fall sperrenden Freilauf 330 eine Drehmomenterhöhung erzielt werden. Haben sich hingegen die Drehzahlen der Pumpenschaufeln 240 und der Turbinenschaufeln 250 im Wesentlichen angeglichen, rotiert das Leitrad 320 durch den Freilauf 330 mit und führt so nur zu einer geringfügigen Störung des entsprechenden Stroms des hydraulischen Mediums. Der hydrodynamische Drehmomentwandler 110 wirkt in diesem Bereich also wie eine hydrodynamische Kupplung.

Der hydrodynamische Wandler 100 umfasst ferner eine Wandlerüberbrückungskupplung 340, bei der eine Einleitung des Drehmoments über eine Außen- und Innenverzahnung (Verzahnung 350) und eine Mehrzahl von Außenlamellen 360 erfolgt. Die Außenverzahnung stellt so eine Struktur 365 zur Schaffung einer formschlüssigen Verbindung zu den Außenlamellen 360 dar. Diese können in einen entsprechenden Reibeingriff mit Innenlamellen 370 gebracht werden, die wiederum über eine entsprechende Zahnung mit einem Innenlamellenträger 380 in Eingriff stehen. Die Außenlamellen 360 stehen mit der ersten Gehäuseschale 120 in einer formschlüssigen Verbindung, während die Innenlamellen 370 mit dem Innenlamellenträger 380 ebenso in einer entsprechenden formschlüssigen Verbindung stehen. Hierbei sind die betreffenden Lamellen 360, 370 entlang der Drehachse 140 verschiebbar, sodass zwischen diese der zuvor bereits genannte Reibeingriff durch Erzeugen einer Kraft entlang der Drehachse 140 bewirkt werden kann.

Zu diesem Zweck weist der hydrodynamische Wandler 100 ferner ein Bedienelement 390 auf, welches im vorliegenden Fall als Kolben 400 ausgeführt ist. Der Kolben 400 ist hierbei hydraulisch betätigbar und über zwei Dichtungen 410, 420 gegenüber der ersten Gehäuseschale 120 bzw. einem Kolbenträger 430 abgedichtet. Entsprechend weisen die erste Gehäuseschale 120 sowie der Kolben 400 im jeweiligen Berührbereich der beiden Dichtungen 410, 420 Dichtflächen 440, 450 auf, über welche die dichtende Wirkung erzielt wird. Der Kolbenträger 430 ist hierbei über eine Nietverbindung 460 mit der ersten Gehäuseschale 120 verbunden.

Der hydrodynamische Wandler 100 umfasst ferner einen Torsionsdämpfer 470, der über eine Mehrzahl zweier unterschiedlicher als Energiespeicher wirkender Federelemente 480, 490 in der Lage ist, kurzzeitig auftretende Drehschwingungen abzufedern. Die beiden Mehrzahlen von Federelementen 480, 490 sind hierbei in Serie geschaltet. Das Drehmoment fließt so im Falle eines reibschlüssigen Kontakts der Innen- und Außenlamellen 370, 360 über den Innenlamellenträger 380 in den Torsionsdämpfer 470 und dort über jeweils die beiden Mehrzahlen von Federelementen 480, 490, bevor dieses über eine Nabenscheibe 500, welche ebenfalls über die Nietverbindung 270 mit der Nabe 280 mechanisch drehfest gekoppelt ist, an die Nabe weitergegeben wird.

Somit stehen dem Drehmoment bei dem in Fig. 1 gezeigten hydrodynamischen Wandler 100 zwei voneinander unabhängige Pfade von dem als Eingang wirkenden Gehäuse 150 bzw. seiner ersten Gehäuseschale 120 zu der als Abtrieb wirkenden Nabe 280 zur Verfügung. Ist die Wandlerüberbrückungskupplung 340 nicht geschlossen, befinden sich also die Außenlamellen 360 und die Innenlamellen 370 nicht in einem Reibeingriff, wird das Drehmoment über den von den Pumpenschaufeln 240 erzeugten Strom des hydraulischen Mediums und die Turbinenschaufeln 250 übertragen. Wird hingegen die Wandlerüberbrückungskupplung 340 geschlossen, fließt das Drehmoment über die und den Torsionsdämpfer 470 zu der Nabe 280.

Der hydrodynamische Wandler 100, wie er in Fig. 1 gezeigt ist, umfasst ferner einen Tilger 510. Dieser ist über eine Nietverbindung 520 eingangsseitig mit dem Torsionsdämpfer 470 gekoppelt.

Das Gehäuse 150 des hydrodynamischen Wandlers 100 ist hierbei so ausgeführt, dass im Wesentlichen die getriebeseitige zweite Gehäuseschale 130 (Pumpenschale) gegenüber einem gegebenenfalls vorhandenen hydrodynamischen Wandler 100 verlängert wurde. Die verlängerte zweite Gehäuseschale schließt an die vorhandene unterseitige erste Gehäuseschale 120 (Wandlerdeckel) an, welcher im Wesentlichen unverändert übernommen werden kann. Hierbei überdeckt sie im Wesentlichen die um den Tilger (Massenschwinger) und/oder einen zusätzlichen Federsatz erweiterten zweireihigen Torsionsdämpfer. Anders ausgedrückt weist bei dem hier gezeigten hydrodynamischen Wandler 100 gemäß einem Ausführungsbeispiel die erste Gehäuseschale 120 entlang der Drehachse 140 eine Länge auf, die kleiner als eine Länge der zweiten Gehäuseschale 130 entlang der Drehachse 140 ist.

Hierdurch kann sich - je nach konkreter Anforderung und je nach geplantem Einsatzgebiet - eine Vielfalt unterschiedlicher Vorteile zeigen. So bleibt zunächst der Änderungsaufwand und damit der Erstellungsaufwand für Werkzeuge und Vorrichtungen auf eine Gehäuseschalenseite, nämlich die der ersten Gehäuseschale 120 begrenzt. Im Falle komplexer hydrodynamischer Wandler ist hierbei die durch die zweite Gehäuseschale 130 (Pumpenschale) gebildete getriebeseitige Gehäuseschale das weniger komplexe Bauteil. Im Gegensatz zu der motorseitigen ersten Gehäuseschale ist eine Verlängerung so mit einem vergleichsweise einfachen Werkzeug herstellbar. Auch die Zugänglichkeit im Hinblick auf Prozessschritte, wie das Sicken, das Beschaufeln, das Verrollen und das Bearbeiten ist weiterhin gegeben.

Ein nicht unerheblicher Vorteil ergibt sich jedoch im Bereich der verwendeten Materialstärken der beiden Gehäuseschalen 120, 130. Da durch die Pumpenschaufel 240 und die Auswölbung 230 ein versteifender Effekt bezüglich der zweiten Gehäuseschale 130 eintritt, kann so deren Materialstärke gegenüber der der ersten Gehäuseschale 120 reduziert werden. So kann bei dem hier gezeigten hydrodynamischen Wandler 100 die zweite Gehäuseschale 130 eine Materialstärke aufweisen, die geringer als die der ersten Gehäuseschale 120 ist. So kann - je nach konkreter Implementierung eines Ausführungsbeispiels eines hydrodynamischen Wandlers 100 - die zweite Gehäuseschale 130 eine Materialstärke aufweisen, die höchstens ein 0.8-faches der Materialstärke der ersten Gehäuseschale 120 beträgt. Bei anderen Ausführungsbeispielen können entsprechend auch nur ein 0.7-faches bzw. ein 0.6-faches der Materialstärke verwendet werden.

Anders ausgedrückt kann die getriebeseitige zweite Gehäuseschale durch den generell eingelöteten Schaufelverband mit den Pumpenschaufeln 240 und dem Innenring 300 eine wesentliche Versteifung erfahren, sodass diese Gehäuseschale 120 an sich durch die Ausbuchtung 230 des hydrodynamischen Kreislaufes auch aus ihrer Geometrie heraus steifer gegenüber dem wirkenden Wandlerinnendruck ausgeführt werden kann so kann die zweite Gehäuseschale beispielsweise generell mit einer geringeren Materialstärke umgesetzt werden. So kann beispielsweise im Falle eines Getriebes mit sechs oder mehr Vorwärtsgängen, also beispielsweise mit acht oder neun Vorwärtsgängen, bei einer Implementierung die erste Gehäuseschale 120 (Deckelschale) aus einem 5 mm dicken Material gefertigt werden, während die zweite Gehäuseschale 130 (Pumpenschale) je nach Baugröße aus 3.0 mm oder 3.5 mm dünnem Blech herstellbar ist.

Hierdurch kann sich ein erheblicher Gewichtsvorteil für die beschriebene Lösung gemäß einem Ausführungsbeispiel ergeben, indem nur die getriebeseitige zweite Gehäuseschale 130 verlängert wird.

Da die Verlängerung jedoch im Allgemeinen einem Hinzufügen von Material an einem äußeren Durchmesser des Gehäuses gleichkommt, steigt an einem axial verlängerten hydrodynamischen Wandler 100 das Massenträgheitsmoment entsprechend an. Durch die Verlängerung nur des an sich steiferen und damit dünner ausführbaren Bauteils der zweiten Gehäuseschale 130 kann jedoch der Anstieg des Massenträgheitsmoments reduziert, gegebenenfalls sogar minimiert werden. So kann es gegebenenfalls ratsam sein die getriebeseitige zweite Gehäuseschale 130 möglichst weit in Richtung Motor, also möglichst weit in Richtung auf die Antriebseinheit zu führen. Die Länge der motorseitigen Deckelschale $L_{WDE}$ ist hierbei im Allgemeinen kleiner als eine Länge die der getriebeseitigen zweiten Gehäuseschale 130, die eine Länge $L_{ZPU}$ aufweist. Es gilt somit

$$L_{WDE} < L_{ZPU} \quad .$$

Wird hierbei unter Berücksichtigung der zuvor beschriebenen Verringerung der Materialstärke die Länge $L_{WDE}$ der ersten Gehäuseschale 120 so weit beschränkt, dass diese höchstens ein 0.7-faches der Länge $L_{ZPU}$ der zweiten Gehäuseschale 130 entspricht, wenn also gilt

$$L_{WDE} \leq 0.7 \cdot L_{ZPU} \quad ,$$

so können gegebenenfalls ein Gewicht und das Massenträgheitsmoment des hydrodynamischen Wandlers 100 besonders effizient reduziert werden.

Hierdurch kann beispielsweise eine Erweiterung des Torsionsdämpfers 470 durch einen zusätzlichen Tilger (Massenschwinger) und/oder durch einen zusätzlichen Federsatz implementiert werden. Dies wird durch die zweite Gehäuseschale 130 im Wesentlichen radial überdeckt. Anders ausgedrückt wird so die Erweiterung des Torsionsdämpfers durch den Tilger 510 bzw. - im Falle einer entsprechenden Implementierung - durch den zusätzlichen Federsatz bzw. die entsprechenden Federelemente diese funktionalen Bauteile im Wesentlichen radial von der Pumpenschale (zweite Gehäuseschale 130) überdeckt. Der Anbindungsbereich des Tilgers 510 an den Torsionsdämpfer 470 wird hierbei nur teilweise durch den entsprechenden Nietflansch für die Nietverbindungen 270 überdeckt. Hierdurch kann also der Montagevorgang im Wesentlichen unverändert weitergeführt werden, ohne dass ein Zugang zu dem betreffenden Nietflansch über die Gebühr erschwert wird. Anders ausgedrückt wird der Anbindungsbereich an den Torsionsdämpfer 470, also dem betreffenden Nietflansch, zumindest nicht vollständig überdeckt.

Zusätzlicher axialer Bauraum für den Tilger 510 und/oder einen zusätzlichen Federsatz kann so erzeugt werden, indem eine Länge der Pumpe eine Torusbreite B' deutlich übersteigt. Die Länge der Pumpe entspricht hierbei der Länge $L_{ZPU}$ der zweiten Gehäuseschale 130 (Pumpenschale) während die Torusbreite B' einem Abstand parallel zu der Drehachse 140 von einer dem Innenraum 220 abgewandten Oberfläche der zweiten Gehäuseschale 130 auf Höhe der Auswölbung 230 zu einem äußersten Punkt der Turbinenschaufel 250, der der ersten Gehäuseschale 120 zugewandt ist, entspricht. Anders ausgedrückt entspricht die Torusbreite B' einer Torusbreite B zwischen den äußeren Begrenzungen der Pumpenschaufeln 240 und der Turbinenschaufeln 250 entlang der gemeinsamen Drehachse 140 zuzüglich der entsprechenden Blechdicken der zweiten Gehäuseschale 130 und des Turbinenschaufelträgers 260. Der zuvor angesprochene axiale Bauraum ergibt sich dann, wenn beispielsweise die Länge der zweiten Gehäuseschale 130 wenigstens einem 1.1-fachen der Torusbreite B' entspricht, wenn also beispielsweise gilt

$$L_{ZPU} > 1.1 \cdot B' \quad .$$

Dieser Wert liegt deutlich über denen, die bei konventionellen hydrodynamischen Wandlern implementiert werden, bei denen beispielsweise zur Implementierung des Verbindungsbereichs 200 die entsprechende Größe im Bereich weniger Prozent größer als die zuvor genannte Torusbreite B' ist.

Ein besonders deutlicher Zuwachs an axialem Bauraum kann beispielsweise dadurch generiert werden, wenn die Länge der Pumpe, also die Länge $L_{ZPU}$ des zweiten Gehäusedeckels 130 die Torusbreite B' wesentlich übersteigt, wenn diese also beispielsweise wenigstens ein 1.5-faches der Torusbreite B' ist und daher beispielsweise gilt

$$L_{ZPU} > 1.5 \cdot B'.$$

Ein hydrodynamischer Wandler 100 gemäß einem Ausführungsbeispiel umfasst so eine zweite Gehäuseschale 130 (Pumpenschale) welche eine verbesserte Entkopplungseinrichtung für Drehschwingung oder andere Drehungleichmäßigkeiten umfasst. So kann im vorliegenden Fall beispielsweise zur Schaffung von möglichst viel axialem Bauraum für einen Tilger 510 (Massenschwinger) und/oder einen zusätzlichen Federsatz auch ein axial sehr kleiner bauender hydrodynamischer Kreislauf im Rahmen der Turbinenschaufeln 250 und der Pumpenschaufeln 240 eingesetzt werden. So kann ein Ausführungsbeispiel eines hydrodynamischen Wandlers 100 beispielsweise dadurch weitergebildet werden, dass die Pumpenschaufeln 240 und/oder die Turbinenschaufeln 250 mit einem im Wesentlichen ovalen Querschnitt in einer Schnittebene ausgeführt werden, welche die Drehachse 140 enthält. So kann beispielsweise eine Erstreckung der betreffenden Schaufeln 240, 250 entlang der Drehachse kleiner sein als eine Hälfte der Erstreckung senkrecht zu der Drehachse in der betreffenden Querschnittsebene. Hierdurch kann bei einer geringeren Verlängerung des Gehäuses 150 des hydrodynamischen Wandlers 100 vergleichsweise viel Bauraum innerhalb des Gehäuses 150 gewonnen werden.

Bezeichnet beispielsweise $L_D$ eine Distanz zwischen der Auswölbung 230 gegenüber einem im Wesentlichen senkrecht zu der Drehachse 140 verlaufenden Abschnitt 530, der sich mehr als die Auswölbung 230 auf die Drehachse 140 hin zu erstreckt, so kann die Distanz $L_D$ beispielsweise wenigstens ein 1.1-faches einer Ausdehnung $L_S$ einer mit der zweiten Gehäuseschale verbundenen Pumpenschaufel 240 sein. Es kann so beispielsweise gelten

$$L_D > 1.2 \cdot L_S .$$

Selbstverständlich können in anderen Ausführungsbeispielen auch andere als die zuvor genannten Ausgestaltungen verwendet werden.

Selbstverständlich kann bei anderen Ausführungsbeispielen eines hydrodynamischen Wandlers 100 auch die erste Gehäuseschale 120 entsprechend derart ausgestaltet sein, dass durch eine im Vergleich einfache Variation einer Ausdehnung des zweiten Gehäusedeckels 130 der hydrodynamische Wandler 100 für unterschiedliche Einsatzgebiete verwendet werden kann. So kann beispielsweise durch eine bereits sehr kompakte Ausgestaltung der ersten Gehäuseschale 120 ein modulares System unterschiedlicher hydrodynamischer Wandler geschaffen werden, bei denen sich die einzelnen Ausgestaltungen nicht zuletzt durch eine Größe der zweiten Gehäuseschale 130 unterscheiden.

Das Gehäuse 150 bei einem hydrodynamischen Wandler 100 gemäß einem Ausführungsbeispiel umfasst so wenigstens die erste Gehäuseschale 120 und die zweite Gehäuseschale 130. Bei vielen Ausführungsbeispielen besteht darüber hinaus ein Interesse daran, das Gehäuse 150 im Wesentlichen auch nur auf die beiden vorgenannten Gehäuseschalen, also die erste und die zweite Gehäuseschale 120, 130 zu beschränken. Dennoch kann gegebenenfalls bei anderen Ausführungsbeispielen auch eine weitere-- beispielsweise mehrteilige Ausgestaltung einzelner Gehäuseschalen und/oder der Einsatz von Zwischenringen oder Zwischenstücken sinnvoll sein.

Wie bereits erläutert wurde, können hydrodynamische Wandler 100 gemäß einem Ausführungsbeispiel als hydrodynamische Drehmomentwandler 110 ausgeführt sein. Es kann sich jedoch bei den hydrodynamischen Wandlern 100 gemäß einem Ausführungsbeispiel auch um eine im Wesentlichen als hydrodynamische Wandler auch um eine hydrodynamische Kupplung handeln, bei der beispielsweise das Leitrad 320 nicht mit implementiert ist. Bei einer solchen hydrodynamischen Kupplung entfällt gegebenenfalls die Drehmoment verstärkende Wirkung. Ein Ausführungsbeispiel kann gegebenenfalls so ein flexibleres Konzept zur Schaffung eines hydrodynamischen Wandlers 100 an unterschiedliche Anforderungen mit möglichst einfachen Mitteln hinsichtlich Konstruktion und/oder technischer Umsetzung ermöglichen.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden

Bezugszeichen

| | |
|---|---|
| 100 | hydrodynamischer Wandler |
| 110 | hydrodynamischer Drehmomentwandler |
| 120 | erste Gehäuseschale |
| 130 | zweite Gehäuseschale |
| 140 | Drehachse |
| 150 | Gehäuse |
| 160 | Außenfläche |
| 170 | Vernietung |
| 180 | Anbindungsstruktur |
| 190 | Verschweißung |
| 200 | Verbindungsbereich |

| | |
|---|---|
| 210 | Wuchtgewicht |
| 220 | Innenraum |
| 230 | Auswölbung |
| 240 | Pumpenschaufel |
| 250 | Turbinenschaufel |
| 260 | Turbinenschaufelträger |
| 270 | Nietverbindung |
| 280 | Nabe |
| 290 | Innenverzahnung |
| 300 | Innenring |
| 310 | weiterer Innenring |
| 320 | Leitrad |
| 330 | Freilauf |
| 340 | Wandlerüberbrückungskupplung |
| 350 | Verzahnung |
| 360 | Außenlamelle |
| 365 | Struktur zur Schaffung einer formschlüssigen Verbindung |
| 370 | Innenlamelle |
| 380 | Innenlamellenträger |
| 390 | Bedienelement |
| 400 | Kolben |
| 410 | Dichtung |
| 420 | Dichtung |
| 430 | Kolbenträger |
| 440 | Dichtfläche |
| 450 | Dichtfläche |
| 460 | Nietverbindung |
| 470 | Torsionsdämpfer |
| 480 | Federelement |
| 490 | Federelement |
| 500 | Nabenscheibe |
| 510 | Tilger |
| 520 | Nietverbindung |
| 530 | Abschnitt |

## Patentansprüche

1. Hydrodynamischer Wandler (100), mit folgenden Merkmalen:

   einer einer Antriebseinheit zugewandten ersten Gehäuseschale (120); und
   einer der Antriebseinheit abgewandten zweiten Gehäuseschale (130),
   wobei die erste Gehäuseschale (120) und die zweite Gehäuseschale (130) um eine gemeinsame Drehachse (140) drehbar angeordnet sind; und
   wobei die erste Gehäuseschale (120) entlang der Drehachse (140) eine Länge ($L_{WDE}$) aufweist, die kleiner als eine Länge ($L_{ZPU}$) der zweiten Gehäuseschale (120) entlang der Drehachse (140) ist.

2. Hydrodynamischer Wandler (100) gemäß Anspruch 1, bei dem die zweite Gehäuseschale (130) eine Materialstärke aufweist, die geringer als eine Materialstärke der ersten Gehäuseschale (120) ist.

3. Hydrodynamischer Wandler (100) gemäß einem der vorhergehenden Ansprüche, bei dem die zweite Gehäuseschale (130) eine Materialstärke aufweist, die höchstens ein 0.8-faches einer Materialstärke der ersten Gehäuseschale (110) beträgt.

4. Hydrodynamischer Wandler (100) gemäß einem der vorhergehenden Ansprüche, bei der die Länge ($L_{WDE}$) der ersten Gehäuseschale (120) entlang der Drehachse (140) höchstens ein 0.7-faches der Länge ($L_{ZPU}$) der zweiten Gehäuseschale (130) beträgt.

5. Hydrodynamischer Wandler (100) gemäß einem der vorhergehenden Ansprüche, bei dem wenigstens eine Pumpenschaufel (240) mechanisch fest an einer Innenfläche der zweiten Gehäuseschale (130) mit dieser verbunden ist, und/oder bei der wenigstens ein Innenring (300) mit der zweiten Gehäuseschale (130) mechanisch fest verbunden ist.

6. Hydrodynamischer Wandler (100) gemäß einem der vorhergehenden Ansprüche, bei dem die zweite Gehäuseschale (130) eine um die Drehachse (140) im Wesentlichen umlaufende und bezüglich eines Innenraums (220) des Wandlers (100) konvexe Auswölbung (230) umfasst.

7. Hydrodynamischer Wandler (100) gemäß Anspruch 6, der ferner wenigstens eine Turbinenschaufel (250) umfasst, die in dem Innenraum (220) des Wandlers (100) angeordnet ist, und bei dem die zweite Gehäuseschale (130) eine Länge ($L_{ZPU}$) entlang der Drehachse (140) von wenigstens einem 1.1-fachen eines Abstands (B') parallel zu der Drehachse (140) von einer dem Innenraum (220) abgewandten Oberfläche der zweiten Gehäuseschale (130) auf Höhe der Auswölbung (230) zu einem der Auswölbung (230) am weitesten abgewandten Punkt der Turbinenschaufel (250) oder einem mit dieser verbundenen weiteren Innenring (310) in dem Innenraum (220) aufweist.

8. Hydrodynamischer Wandler (100) nach einem der Ansprüche 6 oder 7, bei dem sich die Auswölbung (230) gegenüber einem im Wesentlichen senkrecht zu der Drehachse (140) verlaufenden Abschnitt (530), der sich weiter als die Auswölbung (230) zu der Drehachse (140) hin erstreckt, um wenigstens ein 1.2-faches einer Ausdehnung einer mit der zweiten Gehäuseschale (130) mechanisch fest verbundenen Pumpenschaufel (240) erstreckt.

9. Hydrodynamischer Wandler (100) nach einem der vorhergehenden Ansprüche, der ferner wenigstens einen Torsionsdämpfer (470) und/oder wenigstens einen Tilger (510) umfasst, wobei die zweite Gehäuseschale (130) wenigstens einen Torsionsdämpfer (470) und/oder wenigstens einen Tilger (510) radial im Wesentlichen überdeckt.

10. Hydrodynamischer Wandler (100) nach einem der vorhergehenden Ansprüche, bei dem die erste Gehäuseschale (120) und die zweite Gehäuseschale (130) miteinander unmittelbar mechanisch verbunden sind.

11. Hydrodynamischer Wandler (100) nach Anspruch 10, bei der die erste Gehäuseschale (120) und die zweite Gehäuseschale (130) derart ausgebildet sind, dass die erste Gehäuseschale (120) in einem Verbindungsbereich (200), in dem die erste Gehäuseschale (120) und die zweite Gehäuseschale (130) unmittelbar miteinander verbunden sind, die zweite Gehäuseschale (130) radial außen umgreift.

12. Hydrodynamischer Wandler (100) nach einem der vorhergehenden Ansprüche, bei dem die erste Gehäuseschale (120) wenigstens eine an zusätzliche Struktur einer Gruppe von Strukturen umfasst, wobei die Gruppe der Strukturen

- eine Anbindungsstruktur (180) zur Montage des hydrodynamischen Wandlers an einer Antriebseinheit oder einer Ausgangswelle der Antriebseinheit;
- eine Befestigungsstruktur (460), beispielsweise eine Niete, zur Aufnahme eines Bedienelements (390) einer Wandlerüberbrückungskupplung (340), beispielsweise eines Kolbenträgers (430);
- eine Dichtstruktur (410, 420), beispielsweise eine Dichtfläche (440, 450) für das Bedienelement (390) der Wandlerüberbrückungskupplung (340);
- eine Struktur (365) zur Schaffung einer formschlüssigen Verbindung zu einer Lamelle (360) der Wandlerüberbrückungskupplung (340), beispielsweise eine an einem Außendurchmesser integrierte Verzahnung (350);
- eine umlaufende Nut, beispielsweise zur Aufnahme eines Sicherungsrings;
- eine Lauffläche für eine Lagerscheibe; und
- eine Reibfläche der Wandlerüberbrückungskupplung (340).

Fig. 1

$L_{ZPU}$

$L_{WDE}$

$L_S$

$L_D$

100, 110

EP 2 690 315 A1

13

**Europäisches Patentamt**
**European Patent Office**
**Office européen des brevets**

**EUROPÄISCHER RECHERCHENBERICHT**

Nummer der Anmeldung

EP 13 17 3580

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP 2010 138979 A (TOYOTA MOTOR CORP) 24. Juni 2010 (2010-06-24) | 1,4-12 | INV. F16H41/24 |
| A | * das ganze Dokument * | 2,3 | F16H45/02 |
| | ----- | | |
| X | US 2002/175037 A1 (WACK ERWIN [DE] ET AL) 28. November 2002 (2002-11-28) | 1-8,10, 11 | ADD. F16F15/14 |
| A | * das ganze Dokument * | 9,12 | |
| | ----- | | |
| X | DE 10 2008 035775 A1 (LUK LAMELLEN & KUPPLUNGSBAU [DE]) 5. März 2009 (2009-03-05) | 1,4-8, 10,11 | |
| A | * das ganze Dokument * | 2,3,9,12 | |
| | ----- | | |

**RECHERCHIERTE SACHGEBIETE (IPC)**

F16H
F16F

Der vorliegende Recherchenbericht wurde für alle Patentansprüche erstellt

| Recherchenort | Abschlußdatum der Recherche | Prüfer |
|---|---|---|
| München | 11. November 2013 | Masset, Candie |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 13 17 3580

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-11-2013

| Im Recherchenbericht angeführtes Patentdokument | Datum der Veröffentlichung | Mitglied(er) der Patentfamilie | Datum der Veröffentlichung |
|---|---|---|---|
| JP 2010138979 A | 24-06-2010 | KEINE | |
| US 2002175037 A1 | 28-11-2002 | DE 10125438 A1<br>US 2002175037 A1 | 28-11-2002<br>28-11-2002 |
| DE 102008035775 A1 | 05-03-2009 | DE 102008035775 A1<br>JP 2009058128 A<br>US 2009065319 A1 | 05-03-2009<br>19-03-2009<br>12-03-2009 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009042837 A1